# EUROPEAN PATENT APPLICATION

(11) **EP 1 589 221 A2**
(43) Date of publication of application: **26.10.2005**
(21) Application number: 05008150.4
(22) Date of filing: 14.04.2005
(51) Int. Cl.: F03D 1/04

(54) **Wind turbine using chimney effect.**

(30) Priority: 19.04.2004 IT PC20040016
(71) Applicant: COMANDU' Angelo, 26845 Codogno (Lodi) (IT)
(72) Inventor: Comandu' , Angelo, 26845 Codogno (Lodi) (IT); Bonomi, Giovanni, 29010 San Pietro In Cerro (Piacenza) (IT)
(74) Representative: Rapisardi, Mariacristina

(57) **Abstract**

Power plant and process for the generation of electric energy through forced wind power. The plant includes a self-standing vertical structure, anchored to the ground, featuring a suitable diameter and height. Through this structure a powerful airflow operates one or more wind generators which is/are located inside. The plant is provided with several air inlets at the bottom, and an outlet at the top for discharging the air and at least one wind generator interposed between the afore-mentioned inlet -outlet. The tangible difference in the air density and temperature between high and low altitude generates a positive air flow moving from the bottom to the top and operates the internal generators regardless from the presence of winds or air flows. Suitable heating devices are located at the chimney bottom and boost the natural draught effect. A microprocessor controls the heating means in order to achieve a constant temperature at the air inlet and consequently a constant speed and a constant electric output.

## Description

This patent concerns, in general a plant for the production of electric power, in particular an innovating plant for the production of electric power by the use of wind generators.

During the last decades the study and development of alternative systems to oil for the production of power energy, has been subject for very accurate researches all over the world. This effort is justified by different factors, first of all the limited availability of the oil resource, the costs and risks connected with oil extraction and also the open research for alternative systems able to satisfy a steadily increasing energy demand in conjunction with a strong need to reduce the atmospheric pollution.

We cannot neglect the needs of the poor and developing countries and the possibility for them to be autonomous, at least for covering their essential needs, without technologically depending on complicated plants, which are difficult to maintain.

Among the different alternative resources, the production of clean energy using the wind flows already known for many centuries has seen a rapid and significant growth.

We have witnessed the development of advanced generators able to reach hourly productions that were unimagined in the past and systems capable to maintain a constant frequency regardless of the direction and speed variations of the wind. Last but not least the generators need a minimum and very simple maintenance and have a considerably long life.

These modem systems are based on advanced materials and technologies. They have very high towers; enormous wing span and they are usually positioned in selected geographic areas, where the wind flows are present.

Unfortunately, despite the tangible progress obtained with the new generations of windmills, there are s till limits to the use of the existing technology, the huge dimensions very often generate negative impact on the environmental impact and the use is mainly limited to preferential geographical areas where the wind speed can justify the installation.

Another limit is represented by the rather high capital costs of the plant and its operational cost. For this reason the kilowatt cost from wind energy is relatively far from being competitive on an industrial scale.

The main purpose of this patent is to attain (introduce) a power plant for the production of electric energy that can be installed in every geographical area, independently from the presence of natural wind flows.

Another purpose of this patent is to attain a power plant for the production of electric energy, where the production rate is constant, continuous and with stable frequency outcome.

And additional purpose of this invention is to attain a power plant, for the production of electric energy, simple to operate and particularly suitable for the developing countries.

This patent reaches the above and other purposes, introducing a power plant and its relative process that are efficient, innovating and particularly simple to build.

In particular, the electric power plant according to this invention includes at least one conventional wind generator that is located inside a high vertical structure (chimney) anchored to the ground, featuring a cylindrical shape, and suitable dimensions, said structure being provided with at least one radial air inlet positioned at ground level in correspondence with the structured bottom anchored to the ground and a discharge air outlet located at high altitude in correspondence to the structure tip, suitable to convey a warm air flow from the bottom toward the top, characterised in that:
- each radial air inlet is provided with a horizontally positioned intake tunnel having suitable dimensions and length for collecting and conveying the airflow towards the corresponding air inlet;
- auxiliary interacting heating means are provided, located inside the intake tunnel each of which can be individually operated and controlled, designed to release energy to the circulating air by means of heating which results in an air temperature increase inside the tunnel;
- microprocessor based control means are provided, connected to each said heating means, designed to simultaneously manage the amount of heat released to the air from each individual heating means orchestrating to maintain a constant temperature of the incoming air independently from the outer atmospheric conditions;
the tangible size and height of the chimney already being able to create a substantial air density difference between the intake air inlet and the discharge air outlet and maintaining a natural positive air flow which starts from the bottom, enters the vertical conduit throughout the intake tunnel and proceeds in forced circulation with a certain speed towards the top, activating the generators means that absorb a substantial portion of the kinetic as well as potential energy, each of said heating means being able to boost the natural flow, said microprocessor operating a control strategy on each of the said heating means by modulating each individual heat contribution in order to achieve a constant temperature of the air flow inside the chimney regardless of the weather conditions and or from the variation of the heating power over time of each heating means

This patent will be described by the attached figures:
- Figure 1 is schematically showing a section of the power plant according to the present invention.
- Figure 2 is schematically showing a section of the intake tunnel of the power plant in figure 1.
- Figure 3 is schematically showing a top view, partially sectioned in correspondence to the intake tunnel positioned at the bottom of the power plant in figure 1.
- Figure 4 is schematically showing a flow chart of the process of the power plant.
- Figures 5a, 5b and 5c are schematically showing a section of power plant aspiration tunnel comprising several possible combinations of different heating means of the incoming air.
- Figure 6 is schematically showing a section of a different embodiment of the power plant represented in figure 1.
- Figure 7 is schematically showing a section of another embodiment of power plant represented in figure 1.

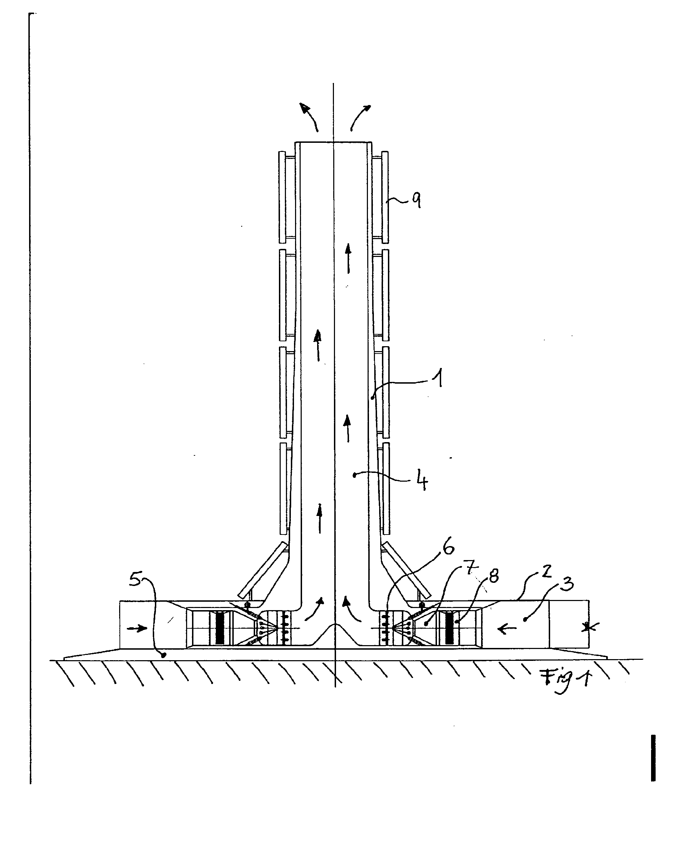

Figure 1 is schematically showing a power plant section according to this invention, substantially composed by a self-bearing vertical conduit 1 featuring a cylindrical shape and a number of horizontal intake inlets 2 functioning as intake collectors. The inlets are anchored to the ground by means of a base 5 and bear inside a cavity that, as better-explained hereby, is suitable to the transport of the air that is taken through the intake conduit and it is driven to the top as a result of the tangible difference in the air density between the intake level and the outlet level, due to the huge dimensions of the conduit 1. Just as reference, the power plant could be provided with a conduit of two hundred meter diameter and more than a thousand meters high. The result is a powerful mechanical updraft generating a forced circulation of airflow with a tangible air speed depending on the conduit height and on air temperature T.

Different heating modules are positioned inside cavity 3 defined by each intake tunnel 2. Module 6 represents a battery of wind generators suitable to convert a portion of the kinetic energy and potential energy of the circulating air into electric energy. Module 7 represents a battery of burners, for example gas burners suitable to increase the temperature and consequently the air kinetic and potential energy, being the burners strategically positioned on the circumference of duct 3 in order not to stop the main flow of circulating air while efficiently transferring energy to the flow of circulating air.

Module 8 represents a battery of radiators suitable to release energy to the circulating air in the form of heat collected by a number of solar panels 9 positioned and clung to the external surface of duct 1.

Ducts 1 and/or 2 are provided with surfaces that are covered inside and/or outside by insulating materials, not represented in the figure, suitable to minimize the losses of heat that would otherwise reduce the energy of the circulating airflow.

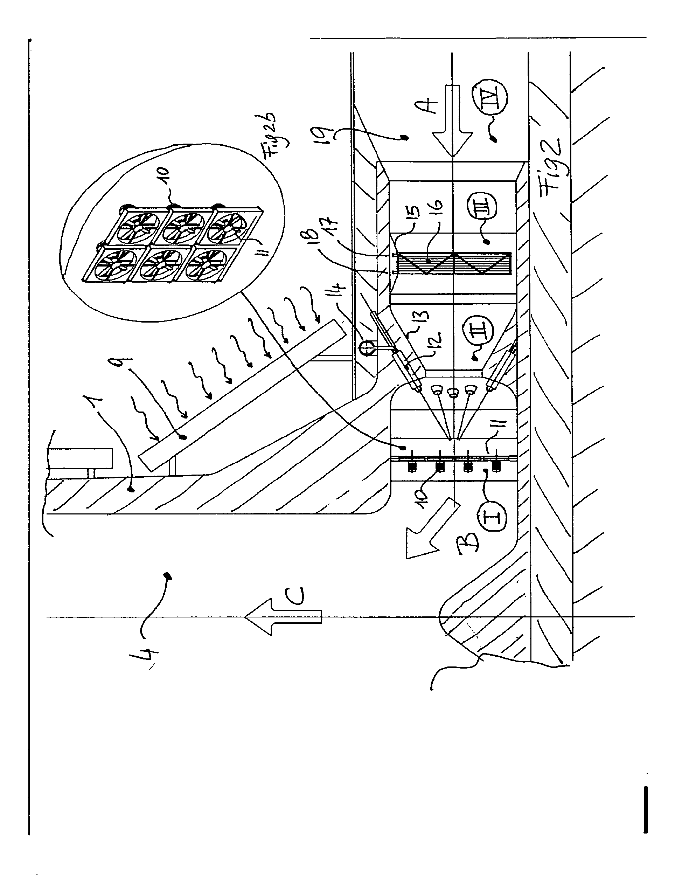

Figure 2 better shows the main components of the power plant in particular module I, represented above with 6 in figure 1, including the battery of electrical generators 10 each of them powered by connected propeller 11 as better shown in the enlargement.

Fig. 2b. Module II, previously indicated with 7 in figure 1, including a number of burners 13 positioned parallel to the generators of a tapered surface 13, each connected to a ring fuel distributor 14 feeding these burners; the burners are individually controlled by a process controller (as it will be better explained further on) controlling and regulating the amount of heat released by module II to the circulating air A.

Module III, previously indicated with 8 in figure 1, including a number of radiators 16 positioned inside a frame 15, each hydraulically connected through suitable pipes and pumps, not shown in the figure, to the solar panels 9 transmitting the heat collected from the solar radiations through a thermal-vector fluid circulating and feeding the radiators in connection with suitable connections 17 and 18. The pumps are individually controlled by a process controller, as it will be better explained further on, controlling and regulating the amount of heat released by module III to the circulating air A.

Module IV, better represented in the next figures, including a large sun collector which by the solar radiations, thanks to a large surface further increments the temperature of the air flowing from the external of the intake collectors toward the centre according to the path indications given by arrows A, B and C, respectively with a basic energy content of the air secured by the natural updraft and increased by the contribution of each single heating module described above.

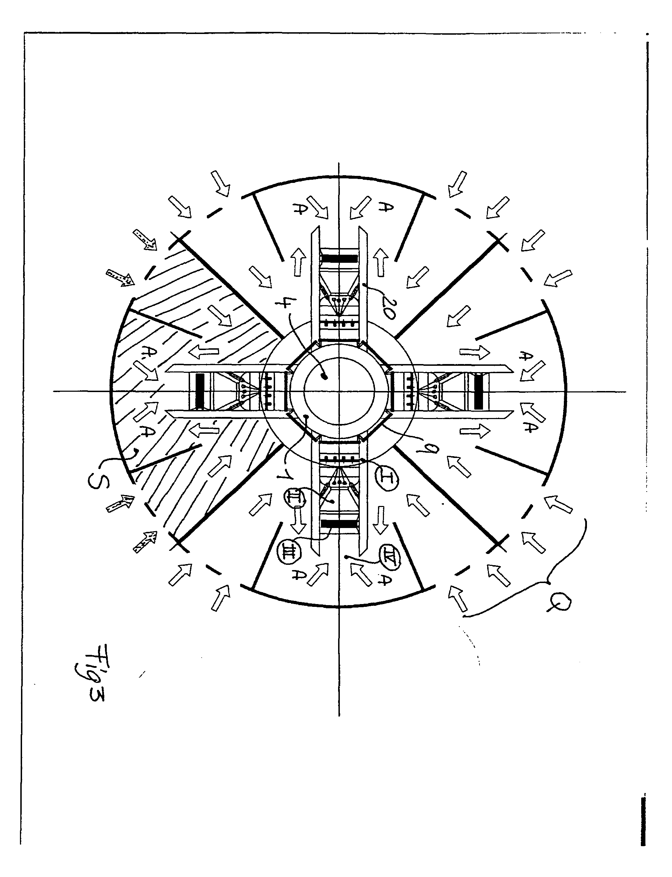

Figure 3 schematically represents an upper view, partially sectioned in the area of the intake tunnels positioned at the bottom of the power plant where the side walls 20 of the air inlets are shown. It must be noticed that the air inlets are more than two and they are radial converging towards the vertical central air inlet 4 of figure 1. The figure also shows in greater detail module IV of figure 2 wherein the surface at the air inlet bottom 1 is closed inside a ring-shaped envelope having a height equivalent to the air inlet and a diameter even exceeding 1000 meters, divided into separate sections, each presenting a large surface exposed to the sun rays penetrating almost completely through the upper covering, purposely built with transparent materials, and almost totally absorbed by the base surface on the ground, purposely realized with materials having a high absorption index so that this absorbed heat is transferred to the air circulating through the space defined by the upper and lower surfaces of the solar collector. Practically the collector is a huge solar panel where the cooling fluid is the same circulating air; purposely build in order not to offer minimum pressure losses to the huge airflow crossing through.

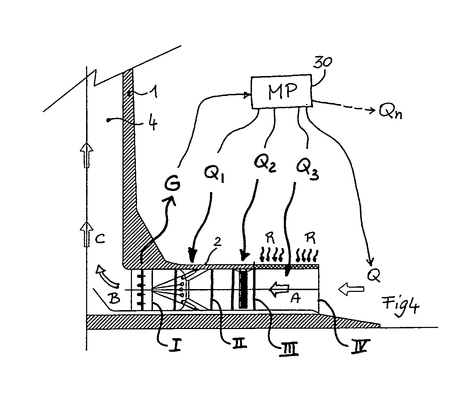

Figure 4 schematically represents the basic operating process of the power plant. Please note as modules I, II, III and IV previously described and the direction of arrows A, B and C showing how the air flow is taken through the intake horizontal collectors 2, then it flows at the basis of the duct 1 and finally travels vertically towards the top.

In particular, following the air path from A to C, conduit 1 generates a natural updraft forcing air in motion and giving to the air the first quid of kinetic and potential energy Q, then module IV releases a second energy amount Q3 collecting solar energy in the ring-shaped collector, module III releases a third energy amount Q2 from the solar energy collected by the solar panels hung on conduit 1, module II releases the fourth energy amount Q1 from the g as or other fuel combustion, and then module I instead of releasing takes from the air a portion of energy G through the interposed fans.

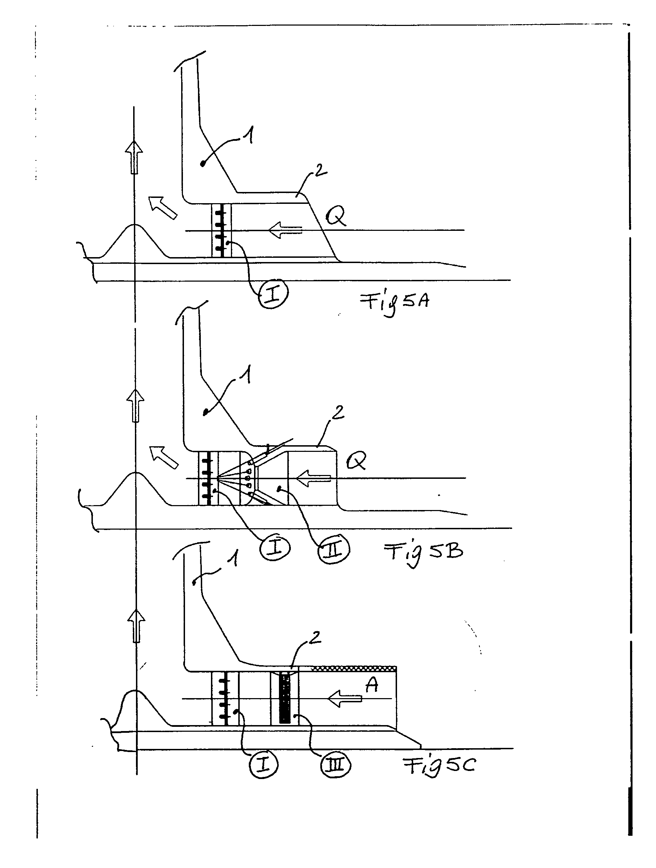

The heating means can be of different type, connected in series or in parallel. In Figures 5 different possible configurations are shown, in particular the most suitable for the developing countries where it is fundamental to maintain very simple plants with a minimum maintenance. In particular figure 5a shows module I where the produced energy only depends on the natural whirlpool generated by vertical duct 1, figure 5 b only shows modules I and II where fuels burners generating heat are the only external energy source that is added to energy Q generated from the natural whirlpool.

Figure 5 c shows modules I, II and III where in addition to energy Q there are other contributions available that are coming from the burners and solar panels hung to duct 1.

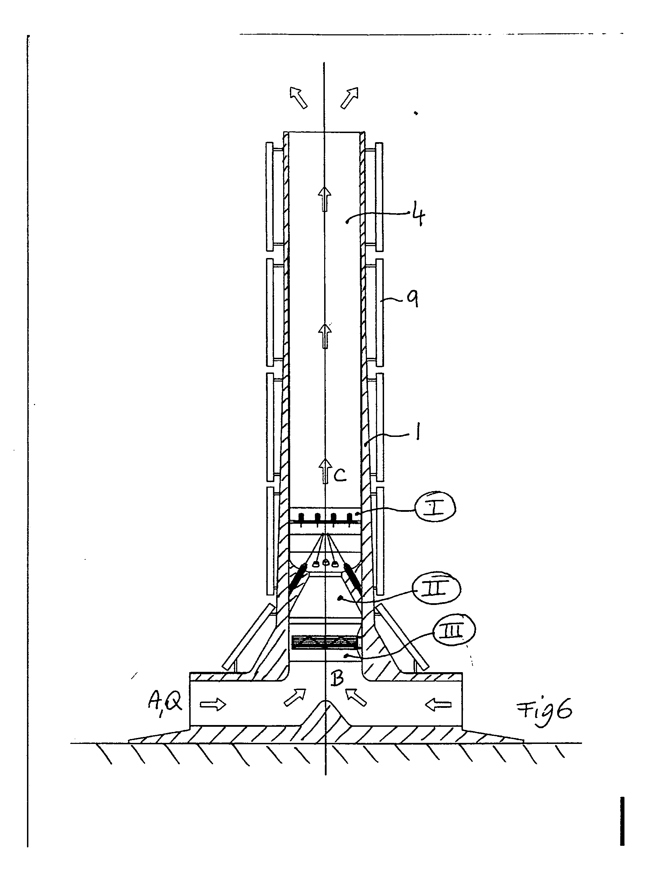

Figure 6 shows different embodiment of the power plant of figure 1, wherein modules I, II and II are located vertically inside vertical duct 4.

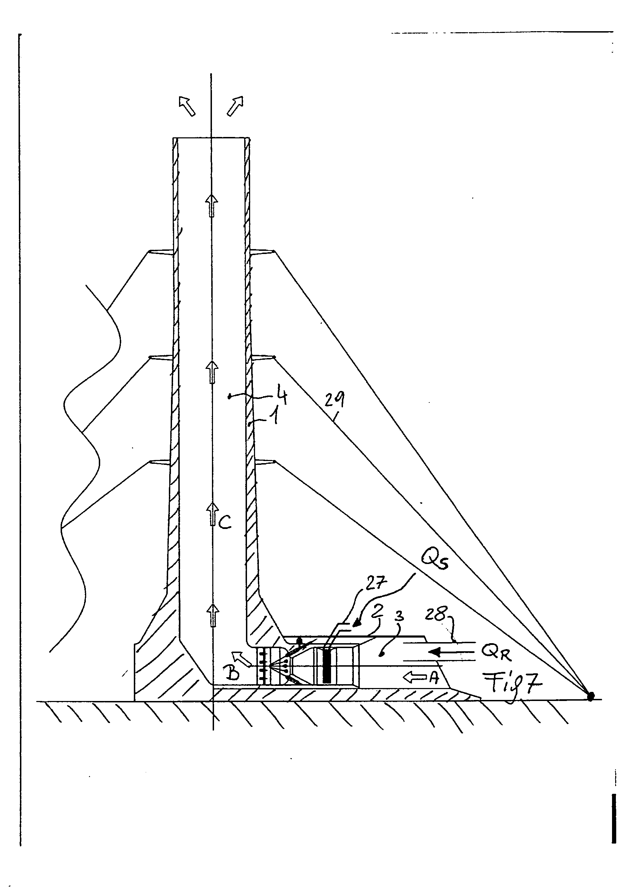

Figure 7 shows a simple power plant featuring rather reduced capacities having a unique horizontal tunnel, a typical configuration for the developing countries. It is important to notice that conduit 1 presents a number of wire ropes 22 providing an efficient wind bracing thus allowing building conduit 1 more economically. This figure also shows that the plant can intake (through duct 28 inserting duct 3 of the horizontal collector 2) toxic fumes and discharge them at a high altitude, in order to reduce atmospheric pollution, or alternatively fumes able to provide an additional energy contribution Qr.

Additional energy contributions Qs can also be brought by cooling fluid pumped to the radiator through additional piping 27,

### Functioning

The process is similar to a hydroelectric power station where the fluid is the air, the turbine is a wind generator and the starting energy given to the air is of potential kind. Several modules are foreseen: each module is individually suitable to release energy to the air coming from different external sources.

Each module is connected to a microprocessor 30, suitable to control the individual contribution of each module so that the temperature of the incoming air is constant and consequently also the air speed and the produced electric energy will be constant. In case the contribution of external sources Qn or the contribution of the solar energy decrease during the night, microprocessor MP compensates by ordering to module II to produce more energy operating different burners simultaneously. The microprocessor is of programmable type and suitable to operate different running strategies including the partialisation of the energy released by the modules in case the energy demand decreases.

From the above details it is clear that this patent achieves all original goals, in particular it achieves the following advantages:
- This power plant or a plurality of these plants can be installed even in geographic areas with no winds, offering to countries the possibility to become independent as regards to their energy need,
- The electric energy output is constant, continuous, with constant frequency and it does not depend on the intensity and/or direction of the winds.
- The process requires the use of simple, economic and reliable generators, since the generated airflow has a rather constant speed that does not require sophisticated transmissions or controls usually present in order to secure the frequency control of the generated electric energy.
- The power plant is particularly suitable to the developing countries since it is technologically simple and easy to run,
- The electric generator, unique element requiring maintenance, is conveniently positioned at ground level, or in the immediate underground, so that the maintenance operations are extremely simple, economic and fast.
- The plant is suitable to operate energy savings since it is able to convert into electric energy external heat sources, which could be otherwise hardly usable, especially in case they are available at a temperature not much different from the environmental air.
- The vertical duct structure can be conveniently used for other purposes such as transmission aerials or toxic fumes evacuation for the control of the environmental pollution.
- The considerable airflow taken at low altitude and then discharged at high altitude can be strategically used for producing real washings in areas with high pollution levels due to heavy and toxic gases, which would be otherwise imprisoned in highly populated areas.

Naturally the proposed solutions are for illustration purpose only, and they are not limited to the described embodiment of the invention as many modifications would be possible without departing from the protective shield of the invention illustrated above and claimed here below.

## Claims

1. Power plant for the production of electric power from wind includes at least one conventional wind generator that is located inside a high vertical structure (chimney) anchored to the ground, featuring a cylindrical shape and suitable dimensions, said structure being provided with at least one radial air inlet positioned at ground level in correspondence with the structured bottom anchored to the ground and a discharge air outlet located at high altitude in correspondence to the structure tip, suitable to convey a warm air flow from the bottom toward the top, **characterised in that**:
- each radial air inlet is provided with a horizontally positioned intake tunnel having suitable dimensions and length for collecting and conveying the airflow towards the corresponding air inlet;
- auxiliary interacting heating means are provided, located inside the intake tunnel each of which can be individually operated and controlled, designed to release energy to the circulating air by means of heating which results in an air temperature increase inside the tunnel;
- microprocessor based control means are provided, connected to each said heating means, designed to simultaneously manage the amount of heat released to the air from each individual heating means orchestrating to maintain a constant temperature of the incoming air independently from the external atmospheric conditions;
the tangible size and height of the chimney already being able to create a substantial air density difference between the intake air inlet and the discharge air outlet and maintaining a natural positive air flow which starts from the bottom, enters the vertical conduit throughout the intake tunnel and proceeds in forced circulation with a certain speed towards the top, activating the generators means that absorb a substantial portion of the kinetic as well as potential energy, each of said heating means being able to boost the natural flow, said microprocessor operating a control strategy on each of the said heating means by modulating each individual heat contribution in order to achieve a constant temperature of the air flow inside the chimney regardless of the weather conditions and or from the variation of the heating power over time of each heating means

2. Power plant for the generation of electric power according to claim 1, **characterised in that** said internal conduit is internally end/or externally covered by an insulating layer in order to minimize the transmission of heat from the warm air inside and the air outside.

3. Power plant for the generation of electric power according to claim 1, **characterised in that** the external surface of said vertical structure is covered with a lay of material with high solar energy absorption index for keeping this surface as warm as possible;

4. Power plant for the generation of electric power according to claim 1, **characterised in that** said auxiliary heating means are including at least one air heater, preferably operating with natural gas, including a number of burners strategically positioned circumferentially to the circular air flow cross section of said air inlet tunnel arranged with an optimal incidence angle so that the airflow is warmed without encountering a significant pressure loss, the amount of heat and the correspondent temperature increase being proportional to the quantity of gas burned, the heating power being controlled by said microprocessor.

5. Power plant for the generation of electric power according to claim 1, **characterised in that** said heating means include:
- at least a radiator (heat exchanger) located in the middle of the circular section of the intake tunnel so that the airflow is heated when crossing throughout such exchanger;
- a plurality of solar panels located outside the chimney and partially covering its outer surface;
- piping hydraulically connecting the solar panels and the heat exchanger in order to form a closed hydraulic circuit;
- a plurality of circulation pumps;
such panels and exchanger, being filled with a coolant fluid and connected in a closed circuit, such circulation pumps providing the transfer of the heat collected by the solar panels to the flowing air, such radiator contributing to heat the circulating air in transit according to the exposed surface and the power of the incident solar rays.

6. Power plant for the generation of electric power according to claim 5, **characterised in that** the heat transferred to the heat exchanger is also supplied by external sources that are hydraulically connected to such exchanger through suitable piping and pumps able to circulate a coolant fluid that takes heat from said external sources, featuring a temperature higher than the environment temperature, and releasing heat to the air entering the power plant, thus allowing to operate energy savings from external heat sources with a relatively low temperature which could not be otherwise used, to produce electric energy.

7. Power plant for the generation of electric power according to claim 1, **characterised in that** such heating means include a big intake collector having the shape of a big ring collocated at the chimney base, having an upper ring-shaped surface built in glass or other similar material that can be easily penetrated by the sun rays and a lower dark surface at ground level or other material featuring an high absorption index, such upper a nd lower surfaces, defining a solar collector through which the circulating air is heated as a consequence of a green-house effect collecting the heat absorbed by the lower surface exposed to the sun rays and transferring to the circulating air which increases the temperature thanks to the power of the sun rays; such contribution obviously depending upon the power of the solar radiations.

8. Power plant for the generation of electric power according to claim 1, **characterised in that** such heating means include at least one auxiliary conduit that is connected with the plant air intake tunnel in order to suck in the external fumes, such external fumes being typically inhaled in order to operate an energy saving or a toxic and polluting fumes evacuation thanks to the power plant considerable height, thus operating a double function of energy saving as well as pollution control.

9. Power plant for the generation of electric power according to claims 4, 5 or 6, **characterised in that** such heating devices can interact in series or in parallel always under the supervision of said microprocessor control means.

10. Power plant for the generation of electric power according to claim 1, **characterised in that** said support structure includes at least one radio antenna positioned nearby the structure tip, allowing to the plant to realize an efficient radio link due to its considerable height.

11. Power plant for the generation of electric power according to claim 1, **characterised in that** said support structure is built inside a hill or a mountain acting as structure and the vertical conduit being a hole with cylindrical section vertically positioned inside the hill or mountain from which it is obtained.

12. Process for the transformation of kinetic and potential energy of an airflow in forced circulation into electric energy by the use of conventional wind generators, **characterised in that** it comprises the following phases:
- intaking the desired quantity of atmospheric air at low altitude compared to the ground level and conveying it towards the base of a very high chimney able to generate, as a result of the difference in temperature between low and high altitude, a significant flow of air in forced ventilation as a consequence of a natural updraft;
- operating the first pre-heating of the forced airflow throughout the ring-shaped solar collector where, as a consequence of the greenhouse effect, the sun transferring its energy and increasing the air temperature, thus amplifying the effect of the chimney natural updraft;
- operating a second pre-heating of the said airflow through a radiator, where a cooling fluid is circulating, which collects and transports the heat collected by a plurality of solar panels positioned outside the chimney, thus further contributing to amplify the effect of the chimney natural updraft;
- operating a third possible pre-heating of the airflow through a gas fired heater located inside the intake tunnel where a number of burners heat the entering air, thus further contributing to amplify the effect of the chimney natural updraft;
- transporting such quantity of air thanks to the considerable difference of the air density between the intake altitude and the discharge altitude, generating an airflow that from the bottom flows toward the top with the desired speed;
- transferring a portion of the kinetic and/or potential energy of such air flow into electric energy by interposing a propeller of a wind electro-generator located at low altitude nearby ground level;
- discharging such airflow at high altitude;
- operating a control strategy through said microprocessor modulating the contribution of each individual heating means in order to maintain constant the temperature of the circulating air and ultimately the air speed and the generated electric power;
above process allowing the generation of a constant electric energy independently from the weather conditions including the circumstance where the sun has the interference of perturbations or there are no natural winds, the microprocessor having the possibility to compensate deficiencies in the amount of solar energy by correspondently increasing the amount of thermal energy supplied by one or more of said auxiliary heating means.
